# FASCICULE DE BREVET EUROPEEN

(11) **EP 1 508 728 B1**
(45) Date de publication et mention de la délivrance du brevet: **02.11.2006**
(21) Numéro de dépôt: 04291972.0
(22) Date de dépôt: 02.08.2004
(51) Int. Cl.: F16H 61/32

(54) **Dispositf de changement de vitesse, ensemble et véhicule automobile correspondants**
Schaltvorrichtung, und damit ausgerüstete Baugruppe und Kraftfahrzeug
Shift device, unit and automotive vehicle therewith

(30) Priorité: 21.08.2003 FR 0310086
(43) Date de publication de la demande: 23.02.2005
(73) Titulaire: Peugeot Citroën Automobiles S.A., 78140 Vélizy Villacoublay (FR)
(72) Inventeur: Gabucci, Stéphane, 92250 La Garenne Colombes (FR); Wascheul, Michael, 78260 Acheres (FR)
(74) Mandataire: Jacobson, Claude

(56) Documents cités:
- EP-A- 0 301 724
- EP-A- 0 310 387
- EP-A- 1 329 651
- GB-A- 2 325 967

## Description

La présente invention concerne un dispositif de changement de vitesse pour une boîte de vitesses, notamment d'un véhicule automobile, conformément au préambule de la revendication 1.

Elle s'applique notamment aux boîtes de vitesses des véhicules automobiles.

Le document FR-A-2 817 314 décrit un dispositif de changement de vitesse pour une boîte de vitesses de véhicule automobile. Le document EP 0 301 724 A décrit un dispositif de changement de vitesses et divulgue les caractéristiques du préambule de la revendication 1.

La boîte de vitesses est entraînée par un moteur d'entraînement qui est relié à la boîte de vitesses au moyen d'un embrayage.

Le dispositif de changement de vitesse comprend un doigt d'actionnement adapté pour actionner des tiges de changement de vitesse dont chacune est reliée à une fourchette de passage de vitesse. Le doigt est mobile en translation entre des positions déterminées de sélection chacune des tiges. Il est en outre mobile en rotation afin de déplacer une tige sélectionnée entre des positions d'engagement d'une vitesse et de désengagement d'une vitesse sélectionnée. Le doigt est entraîné entre ses positions de sélection par un moteur de sélection dont l'arbre de sortie est relié à une vis d'entraînement du doigt. La position angulaire de l'arbre du moteur correspond à tout moment à la position correspondante de sélection du doigt.

Le dispositif comprend en outre un moteur de passage adapté pour entraîner le doigt entre ses positions d'engagement et de désengagement.

Lors d'une opération de changement de vitesse qui nécessite de sélectionner une tige autre que celle actuellement sélectionnée, l'embrayage reliant le moteur et la boîte de vitesses est tout d'abord amené dans une configuration de débrayage qui interrompt la transmission du couple du moteur à la boîte de vitesses, ensuite le doigt est entraîné dans sa position de désengagement, puis est entraîné par le moteur de sélection dans la position de sélection correspondante, avant d'être entraîné dans la nouvelle position d'engagement. Enfin, l'embrayage est de nouveau amené dans sa configuration d'embrayage afin de continuer la transmission du couple du moteur d'entraînement à la boîte de vitesses.

Ce dispositif de changement de vitesse engendre un temps important de rupture de couple entre le moteur d'entraînement et la boîte de vitesses lors d'un changement de vitesse qui nécessite un changement de position de sélection du doigt. Ceci est dû au fait que la position de sélection de l'arbre du moteur de sélection et la position de sélection du doigt sont à chaque instant identiques. En conséquence, le doigt doit être amené dans sa position de désengagement avant que le moteur de sélection puisse être entraîné dans la nouvelle position de sélection.

Ce dispositif de changement de vitesse nécessite en outre un dispositif d'asservissement qui actionne tout d'abord le moteur de passage, puis le moteur de sélection, et enfin de nouveau le moteur de passage. Ces trois actionnements rendent le dispositif d'asservissement complexe. De plus, les moteurs doivent avoir un couple et une dynamique importante afin d'obtenir un temps faible de changement de vitesse.

La présente invention a pour but de pallier au moins le premier inconvénient cité, et de proposer un dispositif de commande qui ait un temps faible de rupture de couple lors d'un changement de vitesse qui implique un changement de position de sélection du doigt.

A cet effet, l'invention a pour objet un dispositif de changement de vitesse du type précité, caractérisé en ce que l'organe de passage et de sélection et l'élément d'actionnement sont mobiles entre leurs positions de sélection respectives de manière indépendante l'un de l'autre, en ce que le dispositif comprend en outre au moins un ressort relié à l'élément d'actionnement et à l'organe de passage et de sélection, de telle sorte que lorsque l'au moins un ressort est à l'état de repos, la position de sélection de l'organe de passage et de sélection correspond à la position de sélection de l'élément d'actionnement, en ce que la direction de sélection est une direction de rotation autour d'un axe, et en ce que l'au moins un ressort est adapté pour être précontraint par une rotation relative de l'organe de passage et de sélection par rapport à l'élément d'actionnement.

Selon des modes particuliers de réalisation, le dispositif selon l'invention comporte l'une ou plusieurs des caractéristiques suivantes :
- le dispositif comprend en outre une clé de verrouillage prévue pour être engagée avec les fourchettes dans leurs position neutre, solidaire de l'organe de passage et de sélection en déplacement suivant la direction de sélection, l'organe de passage et de sélection étant mobile par rapport à la clé de verrouillage suivant la direction de passage, et l'au moins un ressort est relié à l'organe de passage et de sélection par l'intermédiaire de la clé de verrouillage ;
- la direction de passage est une direction de translation suivant l'axe ;
- le ressort est un ressort hélicoïdal ;
- l'élément d'actionnement est un arbre d'actionnement s'étendant suivant la direction de passage, et le ressort hélicoïdal s'étend coaxialement à l'arbre d'actionnement ;
- le dispositif comprend
   . un moteur de sélection adapté pour entraîner l'élément d'actionnement entre ses positions de sélection, et
   . un moteur de passage adapté pour entraîner l'organe de passage et de sélection entre ses positions engagée et désengagée ; et
- le dispositif comprend des butées adaptées pour maintenir l'organe de passage et de sélection dans sa position de sélection lorsqu'il est dans une position engagée et lorsque l'élément d'actionnement est hors de la position de sélection correspondant à celle de l'organe.

L'invention a en outre pour objet un ensemble d'une boîte de vitesses comprenant des fourchettes de passage de vitesse et d'un dispositif de changement de vitesse, caractérisé en ce que le dispositif de changement de vitesse est un dispositif tel que défini ci-dessus.

Selon une variante, l'ensemble est caractérisé par le fait qu'au moins l'une des butées est portée par l'une des fourchettes, et est notamment solidaire de l'une des fourchettes.

L'invention a en outre pour objet un véhicule automobile comprenant un ensemble d'une boîte de vitesses et d'un dispositif de changement de vitesse de la boîte de vitesses, caractérisé en ce que l'ensemble est un ensemble tel que défini ci-dessus.

L'invention sera mieux comprise à la lecture de la description qui va suivre, donnée uniquement à titre d'exemple et faite en se référant aux dessins annexés, sur lesquels :
- la Figure 1 est une vue en perspective de trois quart avant d'une partie d'une boîte de vitesses et d'un dispositif selon l'invention; et
- la Figure 2 est une vue agrandie d'un détail de la Figure 1, vue selon la flèche II de la Figure 1, une partie du boîtier étant enlevée, et une vitesse étant engagée.

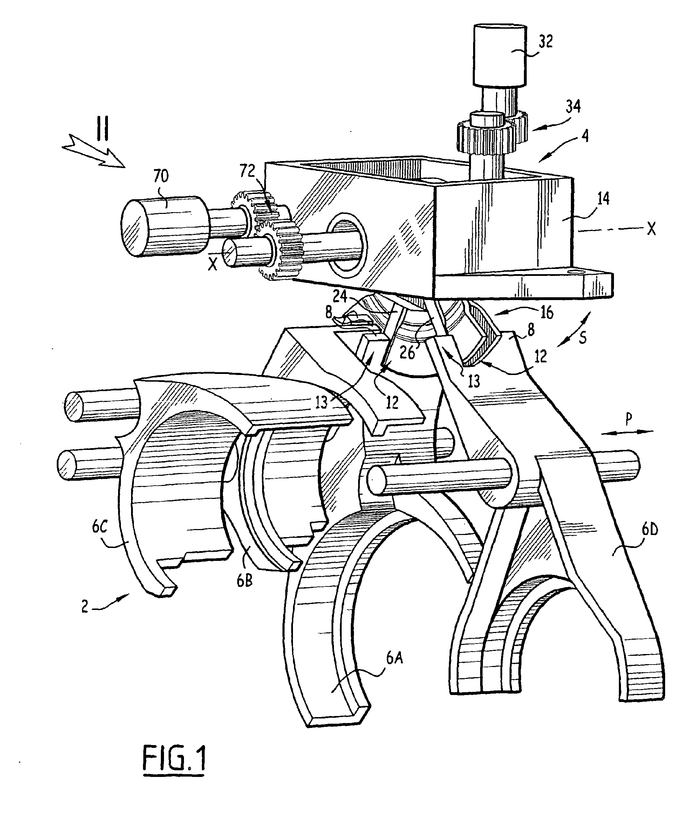

La Figure 1 montre une partie d'une boîte de vitesses 2 d'un véhicule automobile et un dispositif de changement de vitesse 4 selon l'invention. La boîte de vitesses 2 est reliée à un moteur d'entraînement par l'intermédiaire d'un embrayage non représentés. L'embrayage peut être commuté entre une configuration d'embrayage et de débrayage.

La boîte de vitesses 2 comprend quatre fourchettes 6A, 6B, 6C, 6D de passage, connues en soi et adaptées pour déplacer des arbres non représentés de la boîte de vitesses entre les différentes positions de passage. Chaque fourchette 6A à 6D a une position neutre, telle que représentée sur la Figure 1, dans laquelle la vitesse correspondante n'est pas engagée. Chaque fourchette 6A à 6D est déplaçable en coulissement linéaire à partir de sa position neutre suivant une direction de passage P dans deux positions de passage se trouvant de part et d'autre de sa position neutre. Ainsi, la fourchette 6A est adaptée pour passer la première et la deuxième vitesses, la fourchette 6B est adaptée pour passer la troisième et la quatrième vitesses, la fourchette 6C est adaptée pour passer la cinquième et la sixième vitesses, et la fourchette 6D est adaptée pour passer deux vitesses de marche arrière.

En outre, chaque fourchette 6A à 6D comprend une saillie d'actionnement 8, dans laquelle est ménagée une encoche d'actionnement 12. Lorsque les fourchettes 6A à 6D se trouvent dans leur position neutre, les encoches 12 sont alignées les unes par rapport aux autres, dans un plan s'étendant perpendiculairement à la direction P. Chaque saillie d'actionnement 8 comprend par ailleurs une surface de butée 13 (voir ci-après).

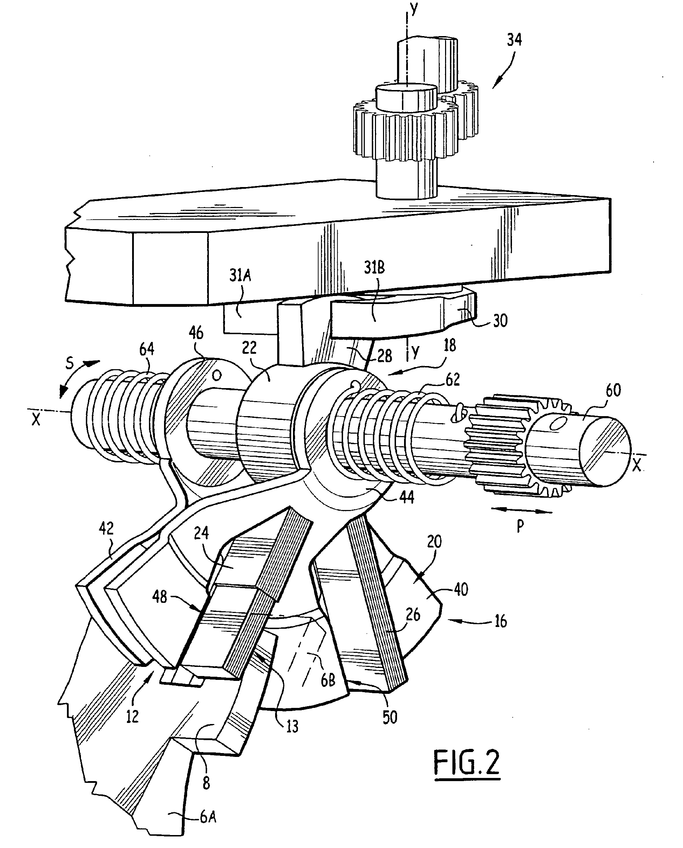

Le dispositif de changement de vitesse 4 comprend un boîtier 14 fixé à la boîte de vitesses 2 et un élément 16 de passage et de sélection de vitesse. Cet élément 16 est muni d'un organe 18 de passage et de sélection de vitesse et d'un organe de verrouillage 20 des fourchettes 6A à 6D. Comme illustré à la Figure 2, l'organe 18 comprend un manchon 22 d'axe X-X sur lequel font saillie radialement deux doigts 24, 26 de passage et de sélection. L'organe 18 est mobile en rotation autour de l'axe X-X, qui s'étend parallèlement à la direction de passage P, entre quatre positions différentes de sélection, suivant une direction de sélection S. Dans chaque position de sélection seulement l'un des doigts 24, 26 s'étend dans l'une des encoches 12, tandis que l'autre doigt 26, 24 se trouve en dehors des encoches 12. L'organe 18 de passage et de sélection est mobile suivant la direction de passage P entre une position désengagée (Figure 1), dans laquelle toutes les fourchettes 6A à 6D sont dans leur position neutre, et deux positions engagées, situées de part et d'autre de la position neutre.

Lorsque le doigt 24, 26 s'engage dans l'une des encoches 12, un déplacement de l'organe 18 entre ses positions engagée et désengagée amène la fourchette 6A à 6D associée dans sa position correspondante. Un déplacement de l'organe 18 permet ainsi de passer les différentes vitesses de la boîte de vitesses.

L'organe 18 de passage et de sélection comprend en outre un ergot 28 radial de passage situé en vis-à-vis des doigts 24, 26.

L'organe 18 peut être entraîné entre ses positions désengagée et engagée au moyen d'une mâchoire d'entraînement 30 mobile en rotation autour d'un axe Y-Y. L'axe Y-Y est disposé perpendiculairement à l'axe X-X et décalé de celui-ci. Cette mâchoire 30 comprend deux bras 31A, 31B qui s'étendent de part et d'autre de l'ergot de passage 28, de telle sorte qu'une rotation de la mâchoire 30 est transformée en un déplacement linéaire de l'organe 18. A cet effet, les bras 31A, 31B et l'ergot 28 sont libres en pivotement dans leurs points de contact mutuelles autour d'un axe qui s'étend parallèlement à l'axe X-X et d'un axe qui s'étend parallèlement par rapport à l'axe Y-Y.

La mâchoire 30 est actionnée par un moteur électrique de passage 32 et par un étage de réduction 34.

L'organe de verrouillage 20 est une clé de verrouillage maintenue fixe en translation par le boîtier 14 suivant l'axe X-X, donc dans la direction de passage P, et mobile en rotation autour de cet axe X-X, donc suivant la direction de sélection S. La clé 20 est constituée de deux portions de verrouillage 40, 42 et de deux brides de montage 44, 46. Chacune des portions de verrouillage 40, 42 a une forme générale de secteur de cercle et deux fentes radiales 48, 50 dans lesquelles s'étendent les doigts 24, 26. Les largeurs circonférentielles des fentes 48, 50 sont sensiblement égales aux largeurs circonférentielles des doigts 24, 26. Ainsi, l'organe 18 et la clé 20 sont fixés en rotation l'un par rapport à l'autre autour de l'axe X-X. L'organe 18 est mobile en translation suivant la direction P entre les brides 44, 46. Les fentes 48, 50 s'étendent sur une longueur axiale suffisante pour assurer la solidarisation en rotation de l'organe 18 et de la clé 20 quelle que soit la position axiale de l'organe 18.

Les portions de verrouillage 40, 42 de la clé 20 ont une largeur axiale qui correspond à la largeur des encoches 12. Ainsi, la clé 20 est adaptée pour bloquer les fourchettes 6A à 6D, dans lesquelles aucun doigt 24, 26 n'est engagé, dans leur position neutre. Les brides de montage 44, 46 sont des anneaux circulaires disposés coaxialement à l'axe X-X de part et d'autre du manchon 22 et à distance de celui-ci.

Un arbre d'actionnement 60 qui est logé dans le boîtier 14 et qui s'étend suivant l'axe X-X est mobile en rotation autour de cet axe entre des positions angulaires de sélection correspondant aux positions de sélection de l'élément 16. L'élément 16 de passage et de sélection est mobile en rotation autour de l'axe X-X par rapport à l'arbre d'actionnement 60. Ainsi, l'arbre 60 et l'élément 16 peuvent prendre des positions angulaires de sélection différentes pour l'un et pour l'autre.

La clé de verrouillage 20 est liée à l'arbre d'actionnement 60 au moyen de deux ressorts hélicoïdaux 62, 64 de torsion disposés coaxialement à l'axe X-X d'un côté et de l'autre des deux brides 44, 46. Chaque ressort 62, 64 comprend une première extrémité fixée à l'arbre d'actionnement 60, et une seconde extrémité fixée à l'une des brides 44, 46. Dans la position de repos dans laquelle les ressorts 62, 64 ne sont pas sollicités en torsion, la position angulaire de sélection de l'arbre 60 correspond à la position angulaire de sélection de l'élément 16. Lorsque les positions de sélection de l'arbre 60 et de l'élément 16 diffèrent l'une de l'autre, les ressorts 62, 64 sollicitent l'élément 16 vers la position de sélection de l'arbre 60.

L'arbre d'actionnement 60 peut être entraîné en rotation entre ses différentes positions de sélection par un moteur électrique de sélection 70 et par un étage de réduction 72.

Les surfaces de butée 13 des saillies d'actionnement 8 sont adaptées pour maintenir l'élément 16 dans sa position de sélection lorsque l'organe 18 se trouve dans l'une de ses positions de passage, et notamment lorsque l'arbre 60 est dans une position de sélection différente de celle de l'élément 16. Ces surfaces 13 s'étendent radialement par rapport à l'axe X-X et se trouvent en vis-à-vis des extrémités radiales des doigts 24, 26. La surface de butée 13 est avantageusement fabriquée d'un seul tenant avec la saillie 8, et est donc solidaire de la fourchette.

Le dispositif selon l'invention fonctionne de la façon suivante.

Initialement, le dispositif est dans sa configuration représentée à la Figure 1.

L'embrayage est dans sa configuration d'embrayage. Les fourchettes 6A à 6D sont dans leur position neutre, dans laquelle aucune vitesse n'est engagée. L'organe 18 de passage et de sélection est dans sa position désengagée. La position de sélection de l'arbre d'actionnement 60 correspond à la position de sélection de l'organe 18 et en conséquence les ressorts 62, 64 sont détendus. Le doigt 24 est aligné avec la saillie d'actionnement 8 de la première fourchette 6A et s'étend dans l'encoche 12 de celle-ci.

Afin de passer la première vitesse, l'embrayage est amené dans sa configuration de débrayage, le moteur de passage 32 est entraîné dans un premier sens, ce qui entraîne la mâchoire 30 en rotation autour de l'axe Y-Y et fait décaler les doigts 24, 26 suivant la direction P sur l'arbre d'actionnement 60. Ainsi, la première fourchette 6A est amenée dans la position de passage de la première vitesse. La clé de verrouillage 20 maintient les autres fourchettes 6B à 6D dans leur position neutre. Puis l'embrayage est amené dans sa configuration d'embrayage.

Afin de passer la deuxième vitesse, tout d'abord l'embrayage est amené dans sa configuration de débrayage. Puis le moteur de passage 32 est entraîné dans un second sens inverse du premier et la première fourchette 6A est décalée dans sa position neutre selon la direction P et ensuite au-delà de celle-ci dans la position de passage de la deuxième vitesse. Enfin, l'embrayage est amené dans sa configuration d'embrayage.

Afin de passer la troisième vitesse, tout d'abord le moteur de sélection 70 est actionné pour entraîner l'arbre d'actionnement 60 en rotation, suivant la direction de sélection S, et amener celui-ci dans sa position angulaire de sélection correspondant à la troisième vitesse. Pendant ce temps, l'élément 16 est maintenu dans la position angulaire de sélection correspondant à la première et à la deuxième vitesses par application du doigt 24 sur la surface de butée 13 de la fourchette 6B. Par conséquent les ressorts 62, 64 sont précontraints. Lorsque l'arbre 60 atteint la position de sélection voulue, le moteur de sélection 70 est arrêté. Ensuite, l'embrayage est amené dans sa configuration de débrayage. Le moteur de passage 32 est démarré et entraîne le doigt 24, par l'intermédiaire de la mâchoire 30, de l'ergot 28, et du manchon 22, dans sa position désengagée. La première fourchette 6A est ainsi amenée dans sa position neutre. Lorsque le doigt 24 atteint sa position désengagée, la clé de verrouillage 20 et par conséquent l'organe 18 est entraînée par les ressorts 62, 64 autour de l'axe X-X vers sa position de sélection qui correspond à la position de sélection de l'arbre d'entraînement 60, donc à la position de sélection de la troisième vitesse. Le doigt 24 vient alors se situer dans l'encoche 12 de la fourchette 6B. Le moteur de passage 32 poursuit l'entraînement du doigt 24, ce qui amène la deuxième fourchette 6B dans sa position de passage de la troisième vitesse (voir Figure 2) et le doigt 24 en appui sur la butée 13 de la fourchette 6A. Enfin, l'embrayage est amené dans sa configuration d'embrayage.

Les changements de vitesse entre la troisième et la quatrième vitesses, entre la cinquième et la sixième vitesses, et entre la première et la seconde vitesses de marche arrière sont effectués de manière analogue au changement de vitesse entre la première et la deuxième vitesses.

Les changements de vitesse entre la quatrième et la cinquième vitesses et entre la première vitesse et la première vitesse de marche arrière sont effectués de manière analogue au changement de vitesse entre la deuxième vitesse et la troisième vitesse.

Le dispositif selon l'invention présente entre autres les avantages suivants.

Lors d'un passage d'une vitesse à une autre vitesse, qui nécessite un changement de position de sélection de l'organe 18, le temps de rupture de couple est faible étant donné que l'arbre d'actionnement 60 peut être amené dans sa position de sélection correspondante avant le débrayage. De plus, l'inertie des pièces à entraîner lors de l'étape de sélection est faible étant donné que l'arbre d'actionnement 60 et l'élément 16 de passage et de sélection sont entraînés successivement dans leur position de sélection. De plus, le moteur de sélection 70 peut avoir un couple d'entraînement nominal faible et une dynamique également faible, étant donné que la sélection de la fourchette est effectuée avant le débrayage.

Pour un seul changement de vitesse qui nécessite un changement de position de sélection, il suffit de démarrer une seule fois le moteur de passage 32. En conséquence, le dispositif d'asservissement du dispositif selon l'invention peut être simple.

Lorsque les ressorts 62, 64 sont à l'état précontraint, l'un des doigts 24, 26 s'applique contre une surface de butée 13 des saillies d'actionnement 8, ce qui empêche l'organe 18 de se déplacer vers la position de sélection de l'arbre 60. Ainsi, une pièce séparée formant butée n'est pas nécessaire, ce qui réduit le coût de fabrication et d'assemblage.

De plus, le dispositif selon l'invention nécessite peu de modifications des boîtes de vitesses connues.

Enfin, le dispositif de changement de vitesse permet également des sauts de rapports.

## Revendications

1. Dispositif de changement de vitesse pour une boîte de vitesses (2), notamment d'un véhicule automobile, du type comprenant
- un organe (18) de passage et de sélection de vitesse adapté pour coopérer avec des fourchettes (6A à 6D) de la boîte de vitesses (2), l'organe (18) de passage et de sélection étant mobile selon une direction de passage (P), entre au moins une position engagée et au moins une position désengagée de vitesse et selon une direction de sélection (S), différente de la direction de passage (P), entre au moins deux positions de sélection de vitesse dans chacune desquelles l'organe (18) de passage et de sélection est adapté pour coopérer avec l'une des fourchettes (6A à 6D) en vue de la déplacer,
- un élément d'actionnement (60) de l'organe (18) de passage et de sélection entre ses positions de sélection, mobile entre des positions de sélection correspondant aux positions de sélection de l'organe (18) de passage et de sélection,
l'organe (18) de passage et de sélection et l'élément d'actionnement (60) étant mobiles entre leurs positions de sélection respectives de manière indépendante l'un de l'autre,
le dispositif comprenant en outre au moins un ressort (62, 64) relié à l'élément d'actionnement (60) et à l'organe (18) de passage et de sélection, de telle sorte que lorsque l'au moins un ressort (62, 64) est à l'état de repos, la position de sélection de l'organe (18) de passage et de sélection correspond à la position de sélection de l'élément d'actionnement (60), et
la direction de sélection (S) étant une direction de rotation autour d'un axe (X-X),
**caractérisé en ce que** l'au moins un ressort (62, 64) est adapté pour être précontraint par une rotation relative de l'organe (18) de passage et de sélection par rapport à l'élément d'actionnement (60).

2. Dispositif selon la revendication 1, **caractérisé en ce qu**'il comprend en outre une clé de verrouillage (20) prévue pour être engagée avec les fourchettes dans leurs position neutre, solidaire de l'organe (18) de passage et de sélection en déplacement suivant la direction de sélection (S), l'organe (18) de passage et de sélection étant mobile par rapport à la clé de verrouillage (20) suivant la direction de passage (P), et en ce que l'au moins un ressort (62, 64) est relié à l'organe (18) de passage et de sélection par l'intermédiaire de la clé de verrouillage (20).

3. Dispositif selon la revendication 1 ou 2, **caractérisé en ce que** la direction de passage (P) est une direction de translation suivant l'axe (X-X).

4. Dispositif selon l'une des revendications 1 à 3, **caractérisé en ce que** le ressort est un ressort hélicoïdal (62, 64).

5. Dispositif selon les revendications 3 et 4 prises ensemble, **caractérisé en ce que** l'élément d'actionnement est un arbre d'actionnement (60) s'étendant suivant la direction de passage (P), et **en ce que** le ressort hélicoïdal (62, 64) s'étend coaxialement à l'arbre d'actionnement (60).

6. Dispositif selon l'une quelconque des revendications 1 à 5, **caractérisé en ce qu**'il comprend
- un moteur de sélection (70) adapté pour entraîner l'élément d'actionnement (60) entre ses positions de sélection, et
- un moteur de passage (32) adapté pour entraîner l'organe (18) de passage et de sélection entre ses positions engagée et désengagée.

7. Dispositif selon l'une quelconque des revendications 1 à 6, **caractérisé en ce qu**'il comprend des butées (13), adaptées pour maintenir l'organe (18) de passage et de sélection dans sa position de sélection lorsqu'il est dans une position engagée et lorsque l'élément d'actionnement (60) est hors de la position de sélection correspondant à celle de l'organe (18).

8. Ensemble d'une boîte de vitesses comprenant des fourchettes (6A à 6D) de passage de vitesse et d'un dispositif de changement de vitesse (4), **caractérisé en ce que** le dispositif de changement de vitesse est un dispositif selon l'une quelconque des revendications précédentes.

9. Ensemble selon la revendication 8, **caractérisé en ce que** le dispositif de changement de vitesse est un dispositif selon la revendication 7, et **en ce qu'**au moins l'une des butées (13) est portée par l'une des fourchettes (6A à 6D), et est notamment solidaire de l'une des fourchettes.

10. Véhicule automobile comprenant un ensemble d'une boîte de vitesses (2) et d'un dispositif (4) de changement de vitesse de la boîte de vitesses,
**caractérisé en ce que** l'ensemble est un ensemble selon l'une des revendications précédentes 8 ou 9.

## Claims

1. Gear change device for a gearbox (2), notably in a motor vehicle, of the type comprising
- a gear shift and selecting member (18) adapted to cooperate with forks (6A to 6D) of the gearbox (2), the gear shift and selecting member (18) being movable in a shift direction (P), between at least one engaged gear position and at least one disengaged gear position and in a selecting direction (S) which is different from the shift direction (P), between at least two gear selection positions, in each of which the gear shift and selecting member (18) is adapted to cooperate with one of the forks (6A to 6D) in order to move it,
- an actuating element (60) for the gear shift and selecting member (18) between its selection positions, which is movable between selection positions corresponding to the selection positions of the gear shift and selecting member (18),
the gear shift and selecting member (18) and the actuating element (60) being movable between their respective selection positions independently of one another,
the device further comprising at least one spring (62, 64) connected to the actuating element (60) and to the gear shift and selecting member (18), such that when at least one spring (62, 64) is in the resting position the selection position of the gear shift and selecting member (18) corresponds to the selection position of the actuating element (60), and
the direction of selection (S) being a direction of rotation about an axis (X-X),
**characterised in that** the at least one spring (62, 64) is adapted to be prestressed by a relative rotation of the gear shift and selecting member (18) in relation to the actuating element (60).

2. Device according to claim 1, **characterised in that** it further comprises a locking key (20) provided to engage with the forks in their neutral position, fixedly connected to the gear shift and selecting member (18) moving in the direction of selection (S), the gear shift and selecting member (18) being movable relative to the locking key (20) in the shift direction (P), and **in that** the at least one spring (62, 64) is connected to the gear shift and selecting member (18) via the locking key (20).

3. Device according to claim 1 or 2, **characterised in that** the shift direction (P) is a direction of translation along the axis (X-X).

4. Device according to one of claims 1 to 3, **characterised in that** the spring is a helical spring (62, 64),

5. Device according to claims 3 and 4 taken together, **characterised in that** the actuating element is an actuating shaft (60) extending in the shift direction (P), and **in that** the helical spring (62, 64) extends coaxially with the actuating shaft (60).

6. Device according to any one of claims 1 to 5, **characterised in that** it comprises
- a selecting motor (70) adapted to drive the actuating element (60) between its selection positions, and
- a shift motor (32) adapted to drive the gear shift and selecting member (18) between its engaged and disengaged positions.

7. Device according to any one of claims 1 to 6, **characterised in that** it comprises abutments (13) adapted to hold the gear shift and selecting member (18) in its selection position when it is in an engaged position and when the actuating element (60) is out of the selection position corresponding to that of the member (18).

8. Gearbox unit comprising gear shift forks (6A to 6D) and a gear change device (4), **characterised in that** the gear change device is a device according to any one of the preceding claims.

9. Unit according to claim 8, **characterised in that** the gear change device is a device according to claim 7, and **in that** at least one of the abutments (13) is carried by one of the forks (6A to 6D) and in particular is fixedly connected to one of the forks.

10. Motor vehicle including a unit of a gearbox (2) and a gear change device (4) of the gearbox, **characterised in that** the unit is a unit according to one of the preceding claims 8 or 9.

## Patentansprüche

1. Getriebe-Schaltvorrichtung (2), insbesondere für ein Kraftfahrzeug, des Typs, der folgendes aufweist:
- ein Durchgangs- und Gangselektionsmittel (18), das zur Kooperation mit Gabeln (6A bis 6D) des Getriebes (2) ausgelegt ist, wobei das Durchgangs- und Selektionsmittel (18) zwischen mindestens einer Gang-Eingriffsposition und mindestens einer Leerlaufposition in einer Durchgangsrichtung (P) beweglich ist und zwischen mindestens zwei Gang-Selektionspositionen, in denen jeweils das Durchgangs- und Selektionsmittel (18) zur Kooperation mit einer der Gabeln (6A bis 6D) im Hinblick auf ihre Verschiebung ausgelegt ist, in einer von der Durchgangsrichtung (P) verschiedenen Selektionsrichtung (S) beweglich ist,
- ein Antriebselement (60) des Durchgangs- und Selektionsmittel (18) zwischen seinen Selektionspositionen, das zwischen Selektionspositionen, die den Selektionspositionen des Durchgangs- und Selektionsmittels (18) entsprechen, beweglich ist,
wobei das Durchgangs- und Selektionsmittel (18) und das Antriebselement (60) zwischen ihren jeweiligen Selektionspositionen unabhängig voneinander beweglich sind,
wobei die Vorrichtung ferner mindestens eine Feder (62, 64) aufweist, die mit dem Antriebselement (60) und dem Durchgangs- und Selektionsmittel (18) so verbunden ist, dass, wenn sich die mindestens eine Feder (62, 64) im Ruhezustand befindet, die Selektionsposition des Durchgangs- und Selektionsmittels (18) der Selektionsposition des Antriebselements (60) entspricht, und
wobei die Selektionsrichtung (S) eine Rotationsrichtung um eine Achse (X-X) ist,
**dadurch gekennzeichnet, dass** die mindestens eine Feder (62, 64) dazu ausgelegt ist, durch eine Rotation relativ zu dem Durchgangs- und Selektionsmittel (18) bezüglich des Antriebselements (60) mechanisch vorgespannt zu werden.

2. Vorrichtung nach Anspruch 1, **dadurch gekennzeichnet, dass** sie weiterhin einen unter Verschiebung in die Selektionsrichtung (S) zum Eingriff in die Gabeln in ihrer neutralen Position vorgesehenen, mit dem Durchgangs- und Selektionsmittel (18) aus einem Stück bestehenden Verriegelungsschlüssel (20) aufweist, wobei das Durchgangs- und Selektionsmittel (18) bezüglich des Verriegelungsschlüssels (20) in Durchgangsrichtung (P) beweglich ist, und **dadurch**, dass die mindestens eine Feder (62, 64) mit dem Durchgangs- und Selektionsmittel (18) über den Verriegelungsschlüssel (20) verbunden ist.

3. Vorrichtung nach Anspruch 1 oder 2, **dadurch gekennzeichnet, dass** die Durchgangsrichtung (P) eine Translationsrichtung in Richtung der Achse (X-X) ist.

4. Vorrichtung nach einem der Ansprüche 1 bis 3, **dadurch gekennzeichnet, dass** die Feder eine Spiralfeder (62, 64) ist.

5. Vorrichtung nach den Ansprüchen 3 und 4 zusammengenommen, **dadurch gekennzeichnet, dass** das Antriebselement eine Antriebswelle (60) ist, die in Durchgangsrichtung (P) verläuft, und **dadurch** dass die Spiralfeder (62,64) koaxial zu der Antriebswelle (60) verläuft.

6. Vorrichtung nach einem der Ansprüche 1 bis 5, **dadurch gekennzeichnet, dass** sie folgendes aufweist:
- einen Selektionsmotor (70), der dazu ausgelegt ist, das Antriebselement (60) zwischen seinen Selektionspositionen zu bewegen, und
- ein Durchgangsmotor (32), der dazu ausgelegt ist, das Durchgangs- und Selektionsmittel (18) zwischen seiner Eingriffsposition und seiner Leerlaufposition zu bewegen.

7. Vorrichtung noch einem der Ansprüche 1 bis 6, **dadurch gekennzeichnet, dass** sie Widerlager (13) aufweist, die dazu ausgelegt sind, das Durchgangs- und Selektionsmittel (18) in seiner Selektionsposition zu halten, wenn es sich in einer Eingriffsposition befindet und wenn sich das Antriebselement (60) außerhalb der Selektionsposition, die derjenigen des Mittels (18) entspricht, befindet.

8. Einheit aus einem Getriebe, das Schaltgabeln (6A bis 6D) aufweist, und einer Gangänderungsvorrichtung (4), **dadurch gekennzeichnet, dass** die Schaltvorrichtung eine Vorrichtung nach einem der vorhergehenden Ansprüche ist.

9. Einheit nach. Anspruch 8, **dadurch gekennzeichnet, dass** die Schaltvorrichtung eine Vorrichtung nach Anspruch 7 ist und **dadurch**, dass mindestens eines der Widerlager (13) von einer der Gabeln (6A bis 6D) getragen wird, und insbesondere aus einem Stück mit einer der Gabeln besteht.

10. Kraftfahrzeug, das eine Einheit aus einem Getriebe (2) und einer Schaltvorrichtung (4) aufweist,
**dadurch gekennzeichnet, dass** die Einheit eine Einheit nach einem der vorhergehenden Ansprüche 8 oder 9 ist.
